# EUROPÄISCHE PATENTANMELDUNG

(11) **EP 4 530 055 A1**
(43) Veröffentlichungstag der Anmeldung: **02.04.2025**
(21) Anmeldenummer: 24186412.3
(22) Anmeldetag: 04.07.2024
(51) Int. Cl.: B29D 11/00, B42D 25/324, B42D 25/342, B42D 25/351, B42D 25/425, B41M 3/14, B29C 59/02

(54) **VERFAHREN ZUR HERSTELLUNG EINER ANORDNUNG VON AUS EINEM KUNSTSTOFF ODER AUS EINEM HARZ BESTEHENDEN MIKROLINSEN AUF EINEM BOGENFÖRMIGEN SUBSTRAT**

(30) Priorität: 26.09.2023 DE 102023126096
(71) Anmelder: Koenig & Bauer AG, 97080 Würzburg (DE)
(72) Erfinder: Stewart, Robert, 1814 La Tour-de-Peilz (CH)
(74) Vertreter: Koenig & Bauer AG

(57) **Zusammenfassung**

Die Erfindung betrifft ein Verfahren zur Herstellung einer Anordnung von aus einem Kunststoff oder Harz bestehenden Mikrolinsen (01) auf einem bogenförmigen Substrat (03), wobei in einer Bogendruckmaschine (11) auf mindestens einem Exemplar des Substrats (03) in einem Siebdruckverfahren eine Schicht aus flüssigem oder plastifiziertem Kunststoff oder Harz aufgetragen wird, dann aus der aus dem Kunststoff oder Harz bestehenden Schicht in einem Prägeverfahren mittels eines Formwerkzeugs (07) die herzustellende Anordnung von Mikrolinsen (01) geformt wird, danach die auf dem betreffenden Exemplar des Substrats (03) zu Mikrolinsen (01) umgeformte Schicht durch eine Bestrahlung mit einer UV-Strahlung gehärtet wird, wobei ein Formwerkzeug (07) verwendet wird, welches zur Formung einer jeden der in der Anordnung mit einer Linsenbreite (L) von maximal 100 µm herzustellenden Mikrolinsen (01) formgebende Hohlräume mit in Transportrichtung (T) des durch die Bogendruckmaschine (11) zu transportierenden Substrats (03) und/oder quer zur Transportrichtung (T) des durch die Bogendruckmaschine (11) zu transportierenden Substrats (03) jeweils ein Paar von sich in einem Abstand (a) gegenüberstehenden konkaven oder konvexen Flächen (02) aufweist, wobei der Abstand (a) zwischen dem jeweiligen Paar von gegenüberstehenden konkaven oder konvexen Flächen (02) mindestens 10% der jeweiligen Linsenbreite (L) beträgt.

## Beschreibung

Durch die DE 11 2010 000 957 T5 ist ein Linsenarray zur Abbildung einer Vielzahl von Bildelementen in einer Objektebene bekannt, wobei das Linsenarray eine Vielzahl von Mikrolinsen enthält, die in oder auf einer Seite eines durchsichtigen oder durchscheinenden Materials geformt sind, wobei die Bildelemente auf der gegenüberliegenden Seite dieses Materials angeordnet sind.

Durch die DE 11 2017 003 672 T5 ist ein Prägewerkzeug zur Verwendung mit einer Prägewalze bekannt, wobei das Prägewerkzeug Folgendes aufweist: einen Werkzeugkörper mit einer Werkzeugoberfläche; und eine Anordnung von Vertiefungen, die in die Werkzeugoberfläche eingebracht ist, um ein gewünschtes Prägeflächenprofil zu formen, wobei mindestens zwei der Vertiefungen durch einen Verbindungsgang miteinander verbunden sind, um dazwischen während des Prägens eine Fluidverbindung zu ermöglichen.

Durch die DE 11 2009 002 538 T5 ist ein Passerverfahren für ein geprägtes Sicherheitsmerkmal auf einem Sicherheitsdokument bekannt, bei dem man ein Substrat bereitstellt; an einer ersten Druckstation eine prägbare Druckfarbe auf einen Bereich des Substrats aufbringt; an einer Prägestation unter Ausbildung des geprägten Sicherheitsmerkmals zumindest einen Teil des Bereichs der prägbaren Druckfarbe mittels Prägemitteln prägt; wobei man bei dem Verfahren ferner an der ersten Druckstation ein Passergebiet von prägbarer Druckfarbe auf dem Substrat druckt; unter Ausbildung eines erkennbaren Passerschlüssels zumindest einen Teil des Passergebietsprägt; die Position des Passerschlüssels erkennt; die Position des Passerschlüssels mit mindestens einer Passermarke, die zumindest teilweise durch ein Druckmittel bereitgestellt ist, vergleicht und als Reaktion auf den Vergleich der Position des geprägten Passerschlüssels mit der der mindestens einen Passermarke die Position des Druckmittels relativ zum Prägemittel einstellt.

Durch die US 2015 077 856 A1 ist eine optische Form mit einem Abstandshalterhohlraumabschnitt, einem Linsenhohlraumabschnitt und einem Fließstopp-Steuerabschnitt bekannt, um das Fließen von optischem Linsenmaterial zwischen dem Abstandshalterhohlraumabschnitt und dem Linsenhohlraumabschnitt zu ermöglichen, sowie eine daraus geformte optische Linsenanordnung.

Derartige Mikrolinsen können heute aus einem Kunststoff oder aus einem Harz in einem industriellen Fertigungsprozess unter Verwendung z. B. eines Prägeverfahrens hergestellt werden. Dazu wird der Kunststoff oder das Harz zunächst in einen schmelzflüssigen Zustand versetzt. Anschließend wird die viskose, d. h. zähflüssige Schmelze auf ein Substrat aufgetragen, woraufhin dann die Mikrolinsen aus der zähen Schmelze z. B. in einem Prägeverfahren unter Verwendung eines Formwerkzeugs geformt werden. Danach werden die derart geformten Mikrolinsen durch eine Bestrahlung mit einer UV-Strahlung gehärtet, d. h. der Kunststoff oder das Harz wird polymerisiert.

Kunststoffe oder Harze weisen aber im Gegensatz beispielsweise zu Metallen eine sehr schlechte Gießbarkeit auf. Die Ursache für diese ungünstige Eigenschaft liegt in der Länge der im Kunststoff oder im Harz enthaltenen Moleküle, die überwiegend langkettig ausgebildet sind. Diese langen Molekülketten führen dazu, dass die Schmelze eines Kunststoffs oder Harzes meist zu zähflüssig ist, um ein Formwerkzeug in idealer Weise zu füllen, was aber notwendig wäre, um Mikrolinsen mit der gewünschten Gestalt und/oder Kontur zu formen. Stattdessen wurde beobachtet, dass sich beim Prägen der Mikrolinsen an deren jeweiligem Rand häufig jeweils ein aus dem Kunststoff oder Harz bestehender Überstand und/oder Ansatz ausbilden. Die einen Überstand und/oder einen Ansatz ausbildende Masse an Kunststoff oder Harz bedeutet i. d. R. in der gestaltgebenden Form des die Mikrolinsen formenden Formwerkzeugs eine Fehlmenge, so dass die betreffende Form des Formwerkzeugs nur unvollständig mit dem Kunststoff oder Harz gefüllt wird. In der Praxis wurde festgestellt, dass diese Fehlmenge sogar zwischen 30% und 50% des Füllvolumens der Form des Formwerkzeugs betragen kann. In der Folge kommt es beim Prägen zu einer erheblichen Fehlausbildung der Mikrolinsen. Diese Fehlausbildung der Mikrolinsen beeinträchtigt gerade in einer Anordnung von mehreren Mikrolinsen mit ihren jeweils sehr geringen Abmessungen im Mikrometerbereich die durch diese Mikrolinsen gewünschte optische Wirkung in einer nicht mehr tolerierbaren Weise, da diese Fehlausbildung z. B. zu einer optisch verzerrten und/oder unvollständigen Wiedergabe eines durch die Mikrolinsen hindurch zu betrachtenden Gegenstandes, insbesondere eines Druckbildes führt.

Der Erfindung liegt die Aufgabe zugrunde, ein Verfahren zur Herstellung einer Anordnung von aus einem Kunststoff oder aus einem Harz bestehenden Mikrolinsen auf einem bogenförmigen Substrat zu schaffen, mit welchem diese Mikrolinsen in einem Prägeverfahren weitestgehend ohne Überstände und/oder Ansätze ausgebildet werden.

Die Aufgabe wird durch ein Verfahren mit den Merkmalen des Anspruchs 1 gelöst. Die abhängigen Ansprüche zeigen vorteilhafte Ausgestaltungen und/oder Weiterbildungen der gefundenen Lösung.

Die mit der Erfindung erzielbaren Vorteile bestehen insbesondere darin, dass Mikrolinsen aus einem Kunststoff oder aus einem Harz in einem Prägeverfahren derart ausgebildet werden, dass eine optisch beeinträchtigende, insbesondere verzerrende und/oder unvollständige Wiedergabe eines durch sie hindurch zu betrachtenden Gegenstandes zufolge von an diesen Mikrolinsen beim Prägen ausgebildeten Überständen und/oder Ansätzen vermieden wird.

Ein Ausführungsbeispiel ist in den Zeichnungen dargestellt. Es zeigen:
- Fig. 1: vorteilhafte Konturen eines zur Ausbildung von Mikrolinsen verwendeten Formwerkzeugs;
- Fig. 2: eine schematische Darstellung einer Druckmaschine zur Durchführung eines Verfahrens zur Herstellung von Mikrolinsen.

In der Optik bezeichnet man mit dem Begriff "Linse" ein für Licht transparentes Bauelement mit mindestens einer im Strahlengang des Lichtes angeordneten lichtbrechenden Oberfläche. Unter dem Begriff Licht wird hier der für das menschliche Auge sichtbare Teil der elektromagnetischen Strahlung verstanden. Im elektromagnetischen Spektrum umfasst der Bereich des Lichts Wellenlängen von etwa 380 nm (violett) bis 780 nm (rot). Dem Folgenden liegen Sammellinsen, also einfallendes Licht bündelnde Linsen zugrunde, insbesondere plankonvex ausgebildete Linsen.

Bekannte Bauformen sind rotationssymmetrische sphärisch oder asphärisch ausgebildete Linsen, wobei die jeweilige Symmetrieachse der betreffenden Linse und deren optische Achse jeweils deckungsgleich verlaufen. Die optische Achse ist somit eine i. d. R. durch den Krümmungsmittelpunkt einer konvexen Linsenoberfläche verlaufende Gerade. Bei einer planen Linsenoberfläche steht die optische Achse senkrecht auf ihr. Die Krümmung einer lichtbrechenden z. B. konvexen Oberfläche wird durch ihren Krümmungsradius angegeben, wobei der Krümmungsradius seinen Ursprung auf der optischen Achse hat.

Eine plane Linsenoberfläche ist durch einen unendlich großen Krümmungsradius definiert.

Bei einer sphärisch ausgebildeten Linse ist die lichtbrechende Oberfläche als ein Oberflächenausschnitt aus einer Kugel ausgebildet, also z. B. in Form einer Kugelkalotte.

Eine asphärisch ausgebildete Linse weist mindestens eine von der Kugelform oder planen Form abweichende lichtbrechende Oberfläche auf. Die Form rotationssymmetrischer asphärischer Flächen wird in der Regel als Kegelschnitt (Kreis, Ellipse, Parabel, Hyperbel) plus ein Korrekturpolynom für Deformationen höherer Ordnung angegeben.

Eine Linse weist zwei vom Strahlengang des Lichtes geschnittene Oberflächen, sogenannte Hüllflächen auf, wobei mit Bezug auf die Lichtbündelung definitionsgemäß gilt, dass der Lichteintritt in eine plankonvex ausgebildete Sammellinse jeweils an deren konvex gekrümmter Hüllfläche und der Lichtaustritt aus dieser Linse an deren planer Hüllfläche erfolgt. Die Hüllflächen sind jeweils Grenzflächen zwischen verschiedenen Medien, in denen sich das Licht jeweils ausbreitet. Eines dieser Medien wird durch das Material, d. h. den Werkstoff der betreffenden Linse gebildet. Mindestens ein anderes Medium ist der i. d. R. Luft gefüllte Raum, in welchem sich die betreffende Linse befindet. Da bei mindestens zwei der im Strahlengang des Lichtes angeordneten Medien zumindest ihre jeweiligen optischen Materialeigenschaften voneinander verschieden sind, wird das Licht an der Grenzfläche zwischen diesen aneinander angrenzenden Medien gebrochen. Somit erfolgt an zumindest einer der Hüllflächen der jeweiligen Linse jeweils eine Lichtbrechung, insbesondere an deren gekrümmter Hüllfläche. Die mit der Lichtbrechung in Verbindung stehende optische Materialeigenschaft wird durch den jeweiligen Brechungsindex des betreffenden Mediums ausgedrückt. Der Brechungsindex ist eine dimensionslose physikalische Größe, die angibt, um welchen Faktor die Wellenlänge und die Phasengeschwindigkeit des Lichts in dem betreffenden Medium kleiner sind als im Vakuum. Von zwei eine gemeinsame Grenzfläche bildenden Medien mit unterschiedlichen Brechungsindizes nennt man das Medium mit dem höheren Brechungsindex das optisch dichtere. Die Abbe-Zahl, auch Abbesche Zahl genannt, ist eine dimensionslose Größe zur Charakterisierung der optischen dispersiven Eigenschaften einer Linse und gibt an, wie stark sich deren Brechungsindex mit der Lichtwellenlänge ändert. Die Eigenschaft einer Linse, von einem durch die betreffende Linse betrachteten Objekt eine optische Abbildung erzeugen zu können, hängt vom Brechungsindex des Materials der jeweiligen Linse und von der Form ihrer jeweils zwischen unterschiedlichen Medien Grenzflächen bildenden Hüllflächen ab.

Als Hauptebene einer Linse wird eine in diesem Bauelement orthogonal zur Symmetrieachse der betreffenden Linse angeordnete Ebene bezeichnet. Bei einer dünnen Linse, bei der ihre größte längs zur Symmetrieachse liegende Ausdehnung, d. h. die Dicke der Linse als sehr klein gegenüber dem Krümmungsradius ihrer konvexen Hüllfläche anzusehen ist, weil der Krümmungsradius der konvexen Hüllfläche z. B. mindestens fünfmal größer ist als diese Dicke, kann mit zumeist ausreichender Genauigkeit für eine Betrachtung von Eigenschaften der betreffenden Linse nur eine einzige Hauptebene zugrunde gelegt werden. Bei einer plankonvexen Linse fällt diese Hauptebene mit der planen Linsenoberfläche zusammen. Die Brennweite einer Linse ist der Abstand zwischen der Hauptebene der betreffenden Linse und ihrem Fokus (Brennpunkt), wobei hier unter dem Fokus einer Linse ein Schnittpunkt von der Linse gebündelter, parallel in diese Linse einfallender Lichtstrahlen verstanden werden soll. Dabei fallen die parallel in die Linse einfallenden Lichtstrahlen nicht notwendigerweise parallel zu ihrer optischen Achse ein, sondern unter einem mit Bezug auf die Hauptebene der betreffenden Linse beliebigen, insbesondere spitzen Einfallswinkel. Eine im Fokus orthogonal zur optischen Achse angeordnete Ebene heißt Fokalebene oder Brennebene.

Die dem Lichteintritt dienende Hüllfläche der betreffenden Linse weist achsensymmetrisch zu ihrer optischen Achse zwei gegenüberliegende, diese Hüllfläche begrenzende, z. B. in der Hauptebene dieser Linse liegende Randpunkte auf, wobei der Abstand dieser beiden Randpunkte eine Breite der betreffenden Linse, d. h. deren Linsenbreite bestimmt. Die Apertur oder Öffnungsweite einer Linse bezeichnet deren freie Öffnung oder deren Durchmesser, durch welche Lichtstrahlen ungehindert empfangen werden können und entspricht maximal der Linsenbreite. Derjenige Punkt, der im Schnittpunkt der optischen Achse mit der dem Lichteintritt dienenden Hüllfläche der betreffenden Linse liegt, wird Scheitel genannt. Der Scheitelpunkt ist auf der dem Lichteintritt dienenden Hüllfläche vom Fokus dieser Linse am fernsten angeordnet.

Eine rotationssymmetrisch sphärisch oder asphärisch ausgebildete Linse fokussiert in sie einfallendes Licht in einem Kegel oder Konus, wobei der Durchmesser der Grundfläche dieses Kegels oder Konus maximal der Linsenbreite und die senkrecht auf der Grundfläche dieses Kegels oder Konus stehende Höhe der Brennweite der betreffenden Linse entsprechen. Die numerische Apertur beschreibt das Vermögen einer Linse, Licht zu fokussieren. Sie bestimmt die minimale Größe des in seinem Fokus erzeugbaren Lichtflecks und ist somit eine wichtige, die Auflösung begrenzende Größe.

Mehrere jeweils z. B. rotationssymmetrisch sphärisch oder asphärisch ausgebildete Linsen, die in einem entweder aus quadratischen oder aus hexagonalen Gitterzellen bestehenden vorzugsweise gleichmäßigen Gitter insbesondere jeweils lückenlos und überlappungsfrei angeordnet sind, bilden eine Linsengruppe, die auch als ein Linsenarray bezeichnet wird.

Eine Mikrolinse ist eine miniaturisierte Form einer konventionellen Linse. Unter dem Begriff einer Mikrolinse soll hier eine Linse verstanden werden, deren Linsenbreite maximal 100 µm beträgt und vorzugsweise im Bereich zwischen 20 µm und 65 µm liegt. Mikrolinsen haben eine Brennweite von weniger als z. B. 100 µm, vorzugsweise maximal 95 µm. Aus Mikrolinsen bestehende optisch abbildende Strukturen werden auch als mikrooptische Strukturen bezeichnet.

Eine aus Mikrolinsen gebildete optisch abbildende Struktur wird insbesondere im Wertdruck zur Herstellung z. B. von Sicherheitselementen oder Banknoten zusammen mit einem vorzugsweise flächig ausgebildeten Druckbild kombiniert angeordnet, indem diese optisch abbildende Struktur z. B. auf ein das Druckbild aufweisendes Substrat aufgebracht wird. Dadurch lassen sich für einen das Druckbild durch die optisch abbildende Struktur betrachtenden Betrachter verschiedene Effekte erzeugen. So kann eine aus mindestens einem Druckbild und mindestens einer optisch abbildenden Struktur bestehende Anordnung z. B. sogenannte Wechselbilder bzw. Wackelbilder (Flips) und/oder räumliche, d. h. dreidimensionale Effekte und/oder Morphing-Effekte und/oder Zoom-Effekte und/oder Animationen erzeugen. Diese Effekte sind für einen Betrachter ohne optische Hilfsmittel wahrnehmbar, wenn er das Druckbild abwechselnd unter verschiedenen Betrachtungswinkeln durch die Mikrolinsen hindurch betrachtet. Die dem Betrachter durch unterschiedliche Betrachtungswinkel präsentierte Wahrnehmung wird auch Lentikularbild genannt.

Das i. d. R. flächige Druckbild wird auf dem vorzugsweise zweidimensional ausgebildeten Substrat z. B. in einem industriellen Fertigungsprozess vorzugsweise mit einer Druckmaschine ausgebildet. Das Substrat ist z. B. eine Bedruckstoffbahn oder als ein Druckbogen ausgebildet. Das Druckbild wird z. B. in einem punktförmigen oder linienförmigen Raster auf das Substrat aufgebracht. Das Druckbild besteht daher z. B. aus mehreren, insbesondere einer Vielzahl von Bildpunkten und/oder Linien. Eine Bildpunktgröße oder eine Linienstärke liegt dabei in einem Bereich von unter 100 µm, vorzugsweise von weniger als 50 µm, insbesondere von weniger als 20 µm, z. B. im Bereich von etwa 5 µm bis 10 µm. Im Folgenden wird davon ausgegangen, dass die Bildpunktgröße von Bildpunkten und/oder die Linienstärke von Linien, die jeweils an der Ausbildung eines zusammen mit einer optisch abbildenden Struktur verwendeten Druckbildes beteiligt sind, z. B. jeweils maximal so groß, vorzugsweise geringer, insbesondere weniger als halb so groß sind wie die jeweilige Linsenbreite der am Aufbau der betreffenden optisch abbildenden Struktur beteiligten Linsen.

Als Auflösungsvermögen bezeichnet man in der Optik die Unterscheidbarkeit feiner Strukturen, also den minimalen Abstand, den z. B. zwei Bildpunkte oder zwei Linien voneinander haben dürfen bzw. müssen, um sie als getrennte Bildpunkte oder Linien wahrnehmen zu können. Das Auflösungsvermögen des bloßen menschlichen Auges variiert von Person zu Person. Normalsichtige Erwachsene können bei einem Abstand von 25 cm zumeist noch Strukturen im Abstand von 150 µm unterscheiden. Das entspricht einem Sehwinkel von ungefähr 2 Winkelminuten, was als Winkelauflösungsvermögen bezeichnet wird. Bei schwachen Kontrasten nimmt die Sehschärfe des menschlichen Auges merklich ab, wobei die Sehschärfe den Kehrwert des Auflösungsvermögens darstellt. Die Linsenbreite einer Mikrolinse ist somit üblicherweise geringer als das Auflösungsvermögen des bloßen Auges eines normalsichtigen Erwachsenen.

Das Substrat ist z. B. ein faserhaltiger Bedruckstoff, insbesondere Papier, oder eine Folie, vorzugsweise eine Polymerfolie. Das Substrat kann opak oder transparent ausgebildet sein. Das Substrat kann einlagig oder mehrlagig, insbesondere abschnittsweise mehrlagig ausgebildet sein. Verschiedene Lagen eines mehrlagigen Substrates können aus verschiedenen Werkstoffen ausgebildet sein, z. B. eine Lage aus Papier und eine weitere Lage aus einer Polymerfolie. Das Substrat oder zumindest eine jeweilige Lage dieses Substrates hat eine Materialstärke, d. h. Dicke z. B. von weniger als 100 µm, vorzugsweise von weniger als 50 µm, insbesondere etwa 25 µm. Ein auf dem Substrat mittels aufgetragener Druckfarbe ausgebildetes Druckbild hat eine Schichtdicke z. B. von weniger als 10 µm, vorzugsweise von weniger als 5 µm, insbesondere im Bereich von 1 µm bis 2 µm. Das Substrat kann einseitig oder doppelseitig bedruckt sein.

Die Anordnung aus Druckbild und optisch abbildender Struktur ist in einer bevorzugten Ausführungsform der Erfindung Bestandteil eines Sicherheitselementes oder eines Dokuments, insbesondere eines Sicherheitsdokuments. Zu diesen Dokumenten zählen beispielsweise Banknoten, Kreditkarten, Schecks, Wertpapiere, Aktienzertifikate, Pässe, Ausweise, Führerscheine, Eigentumsurkunden, Reisedokumente wie Flug- oder Bahnfahrscheine, Eintrittskarten, Studienbelege sowie andere amtliche oder behördliche Urkunden wie Geburts-, Todes- oder Heiratsurkunden. Diese Aufzählung ist nur beispielhaft und keineswegs abschließend. Bevorzugt handelt es sich jedoch um Banknoten.

Mikrolinsen können heutzutage in einem industriellen Fertigungsprozess hergestellt werden. Dabei können aus einem Kunststoff oder aus einem Harz bestehende Mikrolinsen unter Verwendung eines Prägeverfahrens hergestellt werden. Prägen ist ein Urformverfahren und gehört nach DIN 8580 zu einer Gruppe von Fertigungsverfahren, bei denen ein Werkstück aus einem formlosen Werkstoff hergestellt wird. Im vorliegenden Fall wird aus einer flüssigen oder plastifizierten Masse eines Kunststoffs oder Harzes durch ein Formwerkzeug mindestens eine Mikrolinse mit einer bestimmten Gestalt geformt, wobei dann durch eine Bestrahlung mit einer ultravioletten (UV-)Strahlung ein formgebender Zusammenhalt der im Kunststoff oder Harz enthaltenen Molekülketten geschaffen wird. Die UV-Strahlung umfasst einen Wellenlängenbereich von 100 nm (Nanometer) bis 400 nm und ist der energiereichste Teil der optischen Strahlung. Die UV-Strahlung ist für den Menschen nicht sichtbar und kann auch nicht mit anderen Sinnesorganen wahrgenommen werden. Für die hier vorliegende Anwendung hat sich eine UV-Strahlung mit einer Wellenlänge von etwa 315 nm als vorteilhaft erwiesen.

Ein vorteilhaftes Verfahren zur Herstellung einer Anordnung von aus einem Kunststoff oder aus einem Harz bestehenden Mikrolinsen sieht vor, diese Mikrolinsen auf einem bogenförmigen Substrat in einem industriellen Fertigungsprozess mittels einer schnelllaufenden Druckmaschine, d. h. insbesondere in einer pro Stunde mehrere tausend Exemplare des bogenförmigen Substrats bedruckenden Bogendruckmaschine in mehreren aufeinanderfolgenden Verfahrensschritten herzustellen. Eine solche Druckmaschine ist in der Lage, z. B. mindestens 10.000 bogenförmige Substrate, insbesondere 12.000 bis 18.000 derartige Substrate pro Stunde zu transportieren und gegebenenfalls zu bedrucken und auf diesen Substraten jeweils eine Anordnung von aus einem Kunststoff oder aus einem Harz bestehenden Mikrolinsen auszubilden. Mit Bezug auf eine Herstellung einer Anordnung von aus einem Kunststoff oder aus einem Harz bestehenden Mikrolinsen ist vorgesehen, dass in einem ersten Verfahrensschritt auf diesen Exemplaren des bogenförmigen Substrats in einem Siebdruckverfahren eine Schicht aus flüssigem oder plastifiziertem Kunststoff oder aus flüssigem oder plastifiziertem Harz mit einer Schichtdicke vorzugsweise in einem Bereich zwischen 18 µm und 25 µm aufgetragen wird. In einem zweiten Verfahrensschritt wird dann in der Druckmaschine aus der aus dem Kunststoff oder aus dem Harz bestehenden Schicht in einem Prägeverfahren mittels eines auf diese Schicht aufgeprägten Formwerkzeugs die herzustellende Anordnung von Mikrolinsen geformt. In einem dritten Verfahrensschritt wird noch in der Druckmaschine die auf dem betreffenden Exemplar des bogenförmigen Substrats zu der herzustellenden Anordnung von Mikrolinsen umgeformte Schicht durch eine Bestrahlung mit einer UV-Strahlung gehärtet, wobei diese UV-Strahlung eine Wellenlänge von z. B. 315 nm aufweist. Die Härtung des Kunststoffes oder des Harzes kommt durch eine durch die energiereiche Strahlung angeregte Polymerisation dieses Kunststoffes oder dieses Harzes zustande. In einer bevorzugten Ausführungsform sind sowohl das Substrat als auch der darauf aufzutragende Kunststoff oder das darauf aufzutragende Harz jeweils transparent ausgebildet.

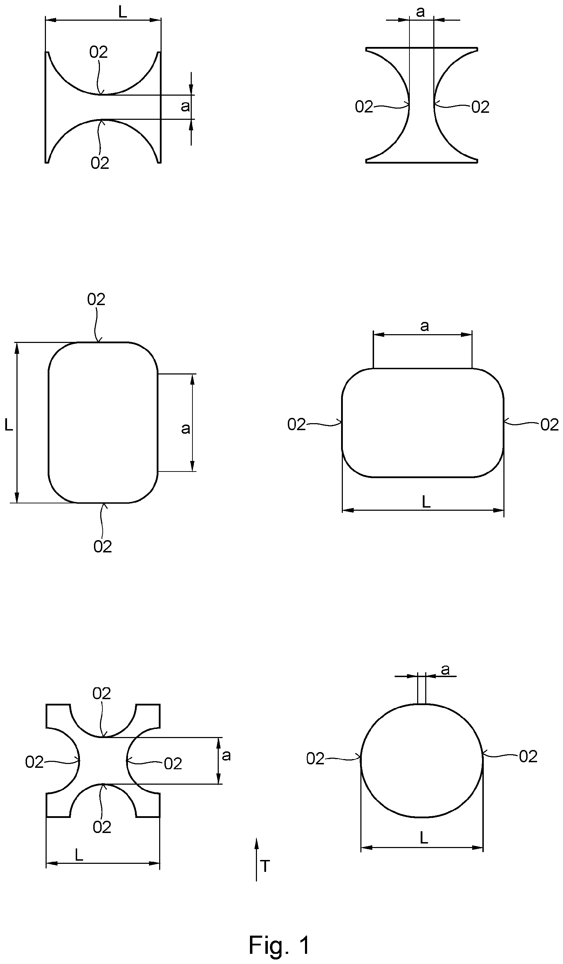

Um zu vermeiden, dass sich beim Prägen der Mikrolinsen 01 an deren jeweiligem Rand jeweils ein aus dem Kunststoff oder Harz bestehender Überstand und/oder Ansatz ausbildet, wird in der insbesondere als eine Bogendruckmaschine ausgebildeten Druckmaschine 11 ein Formwerkzeug 07 verwendet, welches zur Formung einer jeden der in der Anordnung mit einer Linsenbreite L von maximal 100 µm herzustellenden Mikrolinsen 01 formgebende Hohlräume mit in Transportrichtung T der durch die Druckmaschine 11 zu transportierenden Exemplare des bogenförmigen Substrats 03 und/oder quer zur Transportrichtung T der durch die Druckmaschine 11 zu transportierenden Exemplare des bogenförmigen Substrats 03 jeweils ein Paar von sich in einem Abstand a gegenüberstehenden konkaven oder konvexen Flächen 02 aufweist, wobei der Abstand a zwischen dem jeweiligen Paar von gegenüberstehenden konkaven oder konvexen Flächen 02 mindestens 10% der jeweiligen Linsenbreite L beträgt. Dadurch nehmen die die Mikrolinsen 01 formenden Hohlräume des Formwerkzeugs 07 anstelle eines Rechtecks oder Quadrats eher eine Gestalt z. B. mit einer ovalen oder doppel-T-förmigen oder x-förmigen Kontur an. Beispiele für vorteilhafte Konturen der formgebenden Hohlräume des zur Ausbildung der Mikrolinsen 01 verwendeten Formwerkzeugs 07 sind in der Fig. 1 dargestellt. Die dargestellten Konturen sind jeweils eine Schnittdarstellung eines einzelnen formgebenden Hohlraums dieses zur Ausbildung der Mikrolinsen 01 verwendeten Formwerkzeugs 07 an der oder parallel zur vorzugsweise bedruckten Oberfläche des betreffenden Substrats 03.

Eine weitere oder zusätzliche Maßnahme zur Vermeidung eines sich beim Prägen am jeweiligen Rand der Mikrolinsen 01 ausbildenden aus Kunststoff oder Harz bestehenden Überstandes und/oder Ansatzes besteht darin, an der Oberfläche des betreffenden Substrats 03 an der jeweiligen Position der auszubildenden Mikrolinse 01 vor dem dortigen Auftragen der aus dem Kunststoff oder aus dem Harz bestehenden Schicht eine zwischen 30% und 50% des Volumens der an der betreffenden Position auszubildenden Mikrolinse 01 aufweisende Mulde oder Senke auszubilden, in welcher der Kunststoff oder das Harz beim Prägen gehalten wird. Eine solche Mulde oder Senke kann z. B. durch ein Abrollen einer Noppenwalze 12 auf dem Substrat 03 ausgeführt werden. Eine weitere oder alternative Ausführungsform kann an der Oberfläche des betreffenden Substrats 03 ausgebildete Fließbarrieren für den aufzutragenden Kunststoff oder das aufzutragende Harz vorsehen, wobei sich diese Fließbarrieren vorzugsweise quer zur Transportrichtung T der durch die Druckmaschine 11 zu transportierenden Exemplare des bogenförmigen Substrats 03 erstrecken. Eine Fließbarriere, d. h. ein Hindernis für eine Ausbreitung des fließenden Kunststoffes oder Harzes kann sich in Form einer Wandung aus der Oberfläche des betreffenden Substrats 03 erheben oder in Form einer Vertiefung, z. B. einer Rille oder Nut in die Oberfläche des betreffenden Substrats 03 eingebracht sein.

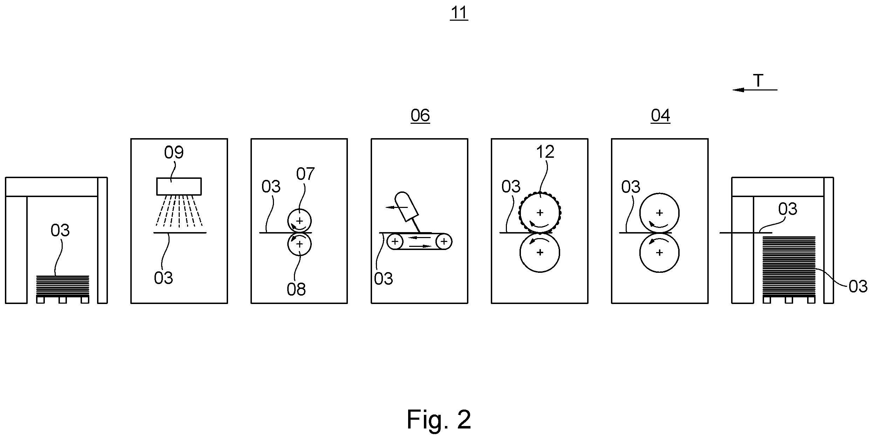

In der Fig. 2 ist schematisch und vereinfacht dargestellt, dass bei der Durchführung des vorgenannten Verfahrens zur Herstellung einer Anordnung von aus einem Kunststoff oder aus einem Harz bestehenden Mikrolinsen 01 die betreffenden Substrate 03 nacheinander einzeln einem Stapel entnommen und nacheinander zunächst in mindestens einem Druckwerk 04 der Druckmaschine 11 vorzugsweise bedruckt werden, wobei z. B. ein Offsetdruckverfahren und/oder ein Inkjetdruckverfahren und/oder ein Tiefdruckverfahren und/oder ein Intagliodruckverfahren verwendet wird bzw. werden. Auf dem derart bedruckten Substrat 03 wird dann bei dessen weiterem Transport in einem Siebdruckwerk 06 der Druckmaschine 11, d. h. in einem ein Siebdruckverfahren ausführenden Druckwerk, eine Schicht aus flüssigem oder plastifiziertem Kunststoff oder aus flüssigem oder plastifiziertem Harz mit einer Schichtdicke vorzugsweise in einem Bereich zwischen 18 µm und 25 µm aufgetragen. Der Kunststoff oder das Harz sind dabei vorzugsweise transparent ausgebildet. Sodann wird im Fortgang des durch die Druckmaschine 11 zu transportierenden Substrats 03 das zuvor beschriebene Prägeverfahren ausgeführt, wobei das betreffende beschichtete Substrat 03 z. B. durch einen Walzenspalt von zwei zusammenwirkenden Walzen 07; 08 geführt wird, wobei die auf der beschichteten Oberfläche des Substrats 03 abrollende Walze 07 eine das Formwerkzeug bildende Mantelfläche mit entsprechenden Kavitäten, d. h. formgebenden Hohlräumen jeweils zur Aufnahme des Kunststoffes oder des Harzes und damit zum Prägen der Mikrolinsen 01 aufweist. Ferner ist dann vorzugsweise noch in der Druckmaschine 11 in Transportrichtung T des Substrats 03 eine auf das betreffende Substrat 03 gerichtete Strahlungsquelle 09 zur Bestrahlung der geprägten Mikrolinsen 01 mit einer UV-Bestrahlung angeordnet.

### Bezugszeichenliste

- 01: Mikrolinse
- 02: Fläche
- 03: Substrat
- 04: Druckwerk
- 05: -
- 06: Siebdruckwerk
- 07: Walze; Formwerkzeug
- 08: Walze
- 09: Strahlungsquelle
- 10: -
- 11: Druckmaschine; Bogendruckmaschine
- 12: Noppenwalze

- a: Abstand
- L: Linsenbreite
- T: Transportrichtung

## Patentansprüche

1. Verfahren zur Herstellung einer Anordnung von aus einem Kunststoff oder aus einem Harz bestehenden Mikrolinsen (01) auf einem bogenförmigen Substrat (03), wobei in einer Bogendruckmaschine (11)
a) auf mindestens einem Exemplar des ihr zugeführten bogenförmigen Substrats (03) in einem Siebdruckverfahren eine Schicht aus flüssigem oder plastifiziertem Kunststoff oder Harz aufgetragen wird,
b) aus der aus dem Kunststoff oder dem Harz bestehenden Schicht in einem Prägeverfahren mittels eines auf diese Schicht aufgeprägten Formwerkzeugs (07) die herzustellende Anordnung von Mikrolinsen (01) geformt wird,
c) die auf dem betreffenden Exemplar des bogenförmigen Substrats (03) zu der herzustellenden Anordnung von Mikrolinsen (01) umgeformte Schicht durch eine Bestrahlung mit einer UV-Strahlung gehärtet wird,
wobei ein Formwerkzeug (07) verwendet wird, welches zur Formung einer jeden der in der Anordnung mit einer Linsenbreite (L) von maximal 100 µm herzustellenden Mikrolinsen (01) formgebende Hohlräume mit in Transportrichtung (T) des durch die Bogendruckmaschine (11) zu transportierenden Substrats (03) und/oder mit quer zur Transportrichtung (T) des durch die Bogendruckmaschine (11) zu transportierenden Substrats (03) jeweils ein Paar von sich in einem Abstand (a) gegenüberstehenden konkaven oder konvexen Flächen (02) aufweist, wobei der Abstand (a) zwischen dem jeweiligen Paar von gegenüberstehenden konkaven oder konvexen Flächen (02) mindestens 10% der jeweiligen Linsenbreite (L) beträgt.

2. Verfahren nach Anspruch 1, **dadurch gekennzeichnet, dass** ein transparenter Kunststoff oder ein transparentes Harz verwendet wird und/oder dass ein opakes oder transparentes Substrat (03) verwendet wird.

3. Verfahren nach Anspruch 1 oder 2, **dadurch gekennzeichnet, dass** der Kunststoff oder das Harz auf dem Substrat (03) mit einer Schichtdicke in einem Bereich zwischen 18 µm und 25 µm aufgetragen wird.

4. Verfahren nach Anspruch 1 oder 2 oder 3, **dadurch gekennzeichnet, dass** das betreffende Substrat (03) vor seiner Beschichtung mit dem Kunststoff oder dem Harz in mindestens einem ein Offsetdruckverfahren oder ein Inkjetdruckverfahren oder ein Tiefdruckverfahren oder ein Intagliodruckverfahren verwendendem Druckwerk (04) der Bogendruckmaschine (11) bedruckt wird.

5. Verfahren nach Anspruch 4, **dadurch gekennzeichnet, dass** das die Beschichtung mit dem Kunststoff oder mit dem Harz ausführende Siebdruckverfahren mit einem in der Bogendruckmaschine (11) angeordneten Siebdruckwerk (06) im Anschluss an das Bedrucken des Substrats (03) in dem Offsetdruckverfahren oder dem Inkjetdruckverfahren oder dem Tiefdruckverfahren oder dem Intagliodruckverfahren ausgeführt wird.

6. Verfahren nach Anspruch 1 oder 2 oder 3 oder 4 oder 5, **dadurch gekennzeichnet, dass** die Bestrahlung der auf dem betreffenden Exemplar des Substrats (03) zu der herzustellenden Anordnung von Mikrolinsen (01) umgeformten Schicht mit einer UV-Strahlung durch eine in der Bogendruckmaschine (11) angeordnete auf das betreffende Substrat (03) gerichtete Strahlungsquelle (09) ausgeführt wird.

7. Verfahren nach Anspruch 1 oder 2 oder 3 oder 4 oder 5 oder 6, **dadurch gekennzeichnet, dass** als Formwerkzeug (07) eine von zwei zusammenwirkenden Walzen (07; 08) verwendet wird, wobei das beschichtete Substrat (03) durch einen von diesen Walzen (07; 08) gebildeten Walzenspalt geführt wird, wobei die auf der beschichteten Oberfläche des Substrats (03) abrollende Walze (07) eine das Formwerkzeug (07) bildende Mantelfläche mit den formgebenden Hohlräumen aufweist.

8. Verfahren nach Anspruch 1 oder 2 oder 3 oder 4 oder 5 oder 6 oder 7, **dadurch gekennzeichnet, dass** an der Oberfläche des betreffenden Substrats (03) an einer jeweiligen Position einer jeden auszubildenden Mikrolinse (01) vor dem dortigen Auftragen der aus dem Kunststoff oder aus dem Harz bestehenden Schicht eine zwischen 30% und 50% des Volumens der an der betreffenden Position auszubildenden Mikrolinse (01) aufweisende Mulde oder Senke ausgebildet wird.

9. Verfahren nach Anspruch 1 oder 2 oder 3 oder 4 oder 5 oder 6 oder 7 oder 8, **dadurch gekennzeichnet, dass** an der Oberfläche des betreffenden Substrats (03) mindestens eine sich quer zu dessen Transportrichtung (T) durch die Bogendruckmaschine (11) erstreckende Fließbarriere für den aufzutragenden Kunststoff oder das aufzutragende Harz ausgebildet wird.

10. Verfahren nach Anspruch 1 oder 2 oder 3 oder 4 oder 5 oder 6 oder 7 oder 8 oder 9, **dadurch gekennzeichnet, dass** mehrere Substrate (03) nacheinander mit einer Transportgeschwindigkeit von 12.000 bis 18.000 Substrate (03) pro Stunde durch die Bogendruckmaschine (11) transportiert und jeweils mit einer Anordnung von Mikrolinsen (01) versehen werden.
